(19) Europäisches Patentamt

European Patent Office

Office européen des brevets

(11) Veröffentlichungsnummer: 0 080 456
B1

(12) EUROPÄISCHE PATENTSCHRIFT

(45) Veröffentlichungstag der Patentschrift:
16.03.88

(21) Anmeldenummer: 82890175.1

(22) Anmeldetag: 24.11.82

(51) Int. Cl.⁴: A 43 B 13/12

(54) Schuhsohle, sowie Form und Verfahren zur Herstellung derselben.

(30) Priorität: 25.11.81 AT 5076/81

(43) Veröffentlichungstag der Anmeldung:
01.06.83 Patentblatt 83/22

(45) Bekanntmachung des Hinweises auf die Patenterteilung:
16.03.88 Patentblatt 88/11

(84) Benannte Vertragsstaaten:
BE CH DE FR GB IT LI NL SE

(56) Entgegenhaltungen:
EP-A-0 036 407
EP-A-0 036 408
CH-A-435 031
FR-A-2 122 866
US-A-4 259 274

(73) Patentinhaber: DISTROPAT AG, Gartenstrasse 2,
CH- 6300 Zug (CH)

(72) Erfinder: Ehrlich, Johann, Roseggerstrasse 16/5,
A-3500 Krems/Donau (AT)

(74) Vertreter: Boeckmann, Peter, Dipl.- Ing.,
Patentanwälte Dipl.- Ing. Peter Boeckmann,
Dipl.- Ing. Leo Brauneiss Strohgasse 10, A-1030
Wien (AT)

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Schuhsohle, sowie Form und Verfahren zur Herstellung derselben

Die Erfindung betrifft eine Schuhsohle, bestehend aus einem oberen Teil aus Massivholz, Preßholz oder aus Schichtholz, der eine der Fußsohle zugewendete, vorzugsweise orthopädisch geformte Sohlenoberseite aufweist, und aus einem unteren Teil aus, vorzugsweise geschäumtem Polyurethan, dessen Unterseite selbst die Laufsohle bildet oder mit einer gesonderten Laufsohle versehen ist. Ferner betrifft die Erfindung eine Form zur Herstellung einer solchen Schuhsohle und ein Verfahren zur Herstellung einer solchen Schuhsohle. Eine derartige Schuhsohle ist aus der EP-A-0 036 408 bekannt. Der obere Teil kann an seiner Oberseite mit einer Holzfurnierabdeckung versehen sein. Unter dem Begriff "Schichtholz" wird hiebei vor allem aus einzelnen miteinander verleimten und/oder verklebten Holzschichten bestehendes Holz verstanden, also auch sogenanntes Sperrholz, bei welchem die Holzschichten in Bezug auf die Faserrichtung vorzugsweise kreuzweise miteinander verleimt sind. Da der aus Massivholz oder Schichtholz bestehende obere Teil der Schuhsohle über die gesamte Sohlenfläche durchlaufend ausgebildet ist, weist dieser Teil somit keine Unterbrechung beispielsweise im Ballenbereich auf.

Es sind bereits Schuhsohlen bekannt, die einen aus zwei Stücken bestehenden oberen Holzteil aufweisen, an welchem z. B. eine Laufsohle aus Polyurethan angeschäumt ist, deren Seitenfläche mit jener des oberen Holzteiles bündig ist. Bei diesen bekannten Schuhsohlen wird zur Befestigung des Schuhoberteiles zumeist die Seitenwand des oberen, aus Holz bestehenden Sohlenteiles in Anschluß an die Sohlenoberseite teilweise weggefräst, damit in der dadurch entstehenden Ausnehmung der untere Randbereich des Schuhoberteiles Aufnahme finden kann. Dadurch fluchtet die Seitenfläche des oberen Teiles der Sohle mit der Außenseite des Schuhoberteiles, wodurch der Schuh eleganter wirkt. Bei dieser Ausführungsform wird weiters ein Schutz des Oberteiles gegen Beschädigung durch Abscheren od.dgl. erzielt, wenn mit dem mit einer solchen Sohle versehenen Schuh beim Gehen an ein Hindernis angestossen wird. Außerdem wird durch die Ausnehmung der Vorteil erzielt, daß man den Schuhoberteil genauer an der Schuhsohle montieren kann, da die Lage des Randbereiches dieses Schuhoberteiles durch die Ausnehmung genau bestimmt ist. Eine solche Vorgangsweise verursacht aber einen zusätzlichen Arbeitsvorgang und erfordert zu dessen Durchführung Spezialkräfte oder Spezialmaschinen. Außerdem führt dieser Vorgang immer zu einem gewissen Ausschuß, da ein Aussplittern des Holzes beim Fräsvorgang auch bei sorgfältiger Bearbeitung nicht immer vermieden werden kann.

Man hat auch bereits vorgeschlagen, den oberen, aus Schichtholz bestehenden Sohlenteil und den unteren, aus geschäumtem Polyurethan bestehenden Sohlenteil gesondert herzustellen und dann durch Kleben miteinander zu verbinden, wobei der untere, aus Polyurethan bestehende Sohlenteil breiter ist und in seinem oberen Bereich schalenförmig geformt ist, so daß er den oberen, aus Schichtholz bestehenden Sohlenteil teilweise übergreift, so daß hierdurch seitlich eine den unteren Randbereich des Schuhoberteiles aufnehmende Ausnehmung entsteht. Hierbei ist zwar kein Fräsvorgang beim oberen, aus Schichtholz bestehenden Sohlenteil für die Herstellung der Ausnehmung erforderlich, jedoch weist diese Ausführungsform wieder den Nachteil auf, daß eine so genaue Herstellung von oberem Sohlenteil aus Schichtholz und unterem Sohlenteil aus Kunststoff, daß diese beim Kleben an der gesamten Verklebungsfläche genau zusammenpassen, in der Praxis bei einer Massenanfertigung nicht möglich ist.

Bei jeder Serienproduktion gibt es bei der Herstellung der einzelnen Teile gewisse maßliche Abweichungen, die sich bei dieser bekannten Ausführungsform nachteilig auswirken. Ist der aus Schichtholz bestehende obere Sohlenteil schmäler als die vom Schalenrand begrenzte Fläche des unteren, aus Polyurethan bestehenden Sohlenteiles, so entstehen zwischen dem oberen Sohlenteil und dem Schalenrand des unteren Sohlenteiles unerwünschte Spalte, welche sich mit Schmutz füllen, an welchen sich beim Gehen irgendwelche Dinge verhängen können und die das Aussehen des Schuhs beeinträchtigen. Ist hingegen der obere Sohlenteil breiter als die vom Schalenrand begrenzte Fläche des unteren, aus Polyurethan bestehenden Sohlenteiles, so ist ein Zusammenpassen der beiden Sohlenteile und damit eine einwandfreie Verbindung derselben von vornherein ausgeschlossen.

Ein weiterer Nachteil besteht bei dieser bekannten Ausführungsform darin, daß für die Verklebung der beiden Sohlenteile zusätzliche Arbeitsvorgänge erforderlich sind. Es muß nämlich zunächst der untere, aus Polyurethan bestehende Sohlenteil an der Verbindungsfläche aufgerauht werden und anschließend mit einem teuren Zweikomponentenkleber bestrichen werden, was zusätzliche Lohn- und Materialkosten verursacht.

Die vorliegende Erfindung hat sich zur Aufgabe gestellt, eine stabile Schuhsohle der eingangs beschriebenen Art zu schaffen, die wirtschaftlich herstellbar ist, bei welcher ein Aussplittern der Kante des oberen, aus Holz bestehenden Teiles verhindert und eine Geräuschdämpfung beim Anschlagen der Schuhsohle an ein Hindernis erzielt wird, die den menschlichen Fuß bequem abstützt und die feuchtigkeitsdicht ist. Zur Lösung dieser Aufgabe schlägt die Erfindung vor, daß

a) der untere Teil am oberen Teil angeschäumt ist,

b) der untere Teil zumindest entlang eines Teiles der Sohlenseitenfläche seitlich über den oberen Teil vorsteht und dabei

c) seitlich über einen Teil der Dicke des oberen Teils hochgezogen ist oder zumindest an den Stellen, an welchen kein Schuhoberteil befestigt ist, bis zur Sohlenoberseite hochgezogen ist.

Die erfindungsgemäße Ausbildung der Schuhsohle bewirkt einen Schutz der Seitenfläche des oberen, aus Holz bestehenden Teiles gegen Aussplittern, wenn gegen ein Hindernis gestoßen wird, wobei dann, wenn der untere Teil lediglich über einen Teil der Dicke des oberen Teiles hochgezogen ist, jedoch der restliche Teil der Dicke dieses oberen Teiles vom Schuhoberteil bedeckt ist, oder dann, wenn der untere Teil überhaupt bis zur Sohlenoberseite des oberen Teiles hochgezogen ist, auch die die Sohlenoberseite begrenzende Kante bedeckt ist. Dadurch wird nicht nur ein Aussplittern auch dieser Kante verhindert, sondern der weitere Vorteil erzielt, daß diese Kante von der Fußsohle des Trägers eines mit einer erfindungsgemäßen Schuhsohle ausgestatteten Schuhs nicht als störend empfunden wird oder gar zu Verletzungen führt. Insbesondere dann, wenn bei Sandalen oder Clogs der hintere Teil der mit einem oberen Teil aus Holz ausgestatteten Sohle nicht von einem Schuhoberteil umgeben ist, drückt sich diese Kante, selbst wenn sie abgerundet ist, in die Ferse der Fußsohle des Benützers ein und verursacht dadurch Beschwerden. Schließlich wird durch die erfindungsgemäße Ausbildung ein Eindringen von Feuchtigkeit, beispielsweise Regenwasser oder Schnee, in den oberen, aus Holz bestehenden Teil verhindert.

Außerdem entsteht bei der erfindungsgemäß ausgebildeten Schuhsohle eine Einsparung an Holz, da der obere Sohlenteil nicht breiter als für den Fußumriß der jeweiligen Schuhgröße unbedingt erforderlich gemacht werden muß, was dann nicht möglich ist, wenn bei der bekannten Schuhsohle ein Teil der Seitenwand des oberen Sohlenteiles wieder für die Herstellung der Ausnehmung zur Aufnahme des Schuhoberteiles weggefräst wird. Gerade bei Schuhsohlen, wo nur sorgfältig ausgewähltes, vollkommen astfreies Holz Verwendung finden kann, welches entsprechend teuer ist, ist diese Einsparung an Holz von wesentlicher Bedeutung.

Gemäß einer zweckmäßigen Ausführungsform der Erfindung bildet der obere Teil das tragende Element der Schuhsohle und weist in Ballenbereich an der dicksten Stelle eine Dickesenkrecht zur Laufsohle gemessen - auf, die bei Massivholz und Preßholz mindestens 9 mm und bei Schichtholz mindestens 7 mm beträgt. Bei Schichtholz kann die Dicke des oberen Teiles deshalb geringer sein, da die Nägel oder Klammern für die Befestigung des Schuhoberteiles durch die Schichten geführt werden und daher ein Verläufen bzw. Herauslaufen dieser Nägel oder Klammern verhindert wird.

Die Dicke des unteren Teiles beträgt im Ballenbereich an der dicksten Stelle - senkrecht zur Laufsohle gemessen - mindestens 7 mm. Zweckmäßig entspricht diese Dicke des unteren Teiles zumindest der halben Dicke, vorzugsweise der ganzen Dicke, des oberen Teiles, jeweils an der dicksten Stelle im Ballenbereich. Die Dicke des unteren Teiles im Ballenbereich entspricht somit zumindest einem Drittel, vorzugsweise der Hälfte der Gesamtsohlenstärke. Dadurch wird das Tragegefühl eines mit der erfindungsgemäßen Schuhsohle versehenen Schuhs verbessert, da durch den dicken unteren Teil aus Polyurethanschaum gleichsam ein Polster gebildet wird, durch welchen eine wesentliche Stoßdämpferwirkung erfolgt, wodurch auch ein geräuscharmes Gehen gewährleistet ist.

Beim Anschäumen des unteren Teiles an den oberen Teil wird eine chemische Verbindung zwischen den OH-Gruppen des Holzes und den Isocyanatgruppen des Polyurethans bewirkt.

Vorzugsweise kann die obere Kante des seitlich über den oberen Teil vorstehenden unteren Teiles abgerundet sein.

Gemäß einem weiteren Merkmal der Erfindung ist im Absatzbereich der Schuhsohle ein mit dem oberen Teil verbundener Holzkern vorgesehen, an dem das Polyurethanmaterial des unteren Teiles gleichfalls angeschäumt ist. Dieser Holzkern kann hierbei als gesonderter Teil hergestellt und mit dem oberen Teil verbunden sein, der Holzkern kann aber auch mit dem oberen Teil einstückig ausgebildet sein. Durch die Anordnung dieses Holzkernes im Absatzbereich der Schuhsohle erfolgt eine seitliche und vertikale Stabilisierung dieses Absatzbereiches, wodurch beim Gehen sowohl ein seitliches Ausweichen des Absatzes als auch ein Zusammendrücken des Absatzes in Höhenrichtung, also ein sogenanntes "Schwimmen", verhindert wird.

Der obere Teil der Schuhsohle kann erfindungsgemäß einstückig ausgebildet sein. In diesem Fall weist zweckmäßig der untere Teil ein spezifisches Gewicht unter 0,55 vorzugsweise zwischen 0,45 und 0,55 auf. Es ist aber auch eine Ausführungsform möglich, bei welcher der obere Teil aus zumindest zwei Stücken besteht, die durch einen einstückig mit dem unteren Teil ausgebildeten Verbindungsteil miteinander verbunden sind. In diesem Fall ist es zweckmäßig, wenn der untere Teil ein spezifisches Gewicht zwischen 0,65 und 0,75, vorzugsweise zwischen 0,65 und 0,7 aufweist. Von Vorteil ist es ferner, wenn der untere Teil eine Härte zwischen 45 und 65 Shore A, vorzugsweise zwischen 50 und 60 Shore A, besitzt. Diese Werte ergeben eine Sohle, die den an sie gestellten mechanischen Anforderungen entspricht, wobei weiters optimale Ergebnisse hinsichtlich des Tragekomforts erzielt werden, also ein stoßdämpftes, elastisches, weiches, geräuscharmes, schallgedämpftes klapperfreies Gehen sichergestellt wird. Durch das relativ niedrige spezifische Gewicht des unteren Teiles bei einstückig ausgebildetem oberen Teil wird das Gesamtgewicht der Schuhsohle geringer, die mit einer solchen Sohle versehenen Schuhe sind somit leichter, was beim Gehen als angenehm empfunden wird. Außerdem wird dadurch die Rutschfestigkeit und die Abriebfestigkeit des unteren Teiles, der ja an seiner Unterseite die Laufsohle bildet, verbessert. Schließlich ist der Materialbedarf für die Herstellung des unteren Sohlenteiles mit dem erwähnten spezifischen Gewicht gering, so daß auch bezüglich des unteren Teiles eine wesentliche Kosteneinsparung erzielt wird.

Der Schuhoberteil ist zweckmäßig am oberen Teil der Sohle durch Klammern oder Nägel befestigbar.

Weiters ist es von Vorteil, wenn die Seitenwand des oberen Teiles der Schuhsohle in Richtung zum unteren Teil konisch zusammenläuft, wenn somit dieser obere Teil oben breiter ist als unten. In diesem Fall kann nämlich bei Herstellung der erfindungsgemäßen Schuhsohle eine Form Verwendung finden, die aus einem Formhauptkörper und einer Abdeckung besteht, wobei der Formhauptkörper einen oberen Formhohlraum und einen gegebenenfalls eine Einfüllöffnung für das polyurethanbildende Material aufweisenden unteren Formhohlraum besitzt. Der obere Formhohlraum weist hiebei eine in Richtung zum unteren Formhohlraum konisch zusammenlaufende Seitenwand auf, deren Neigung im wesentlichen der Neigung der Seitenwand des oberen Teiles der Schuhsohle entspricht, und es ist im Übergangsbereich zwischen den beiden Formhohlräumen der untere Formhohlraum gegenüber dem oberen Formhohlraum verbreitert. Der obere Formhohlraum ist hiebei so ausgebildet, daß sich bei in diesen oberen Formhohlraum eingesetztem oberen Teil der Schuhsohle dieser Teil teilweise in den unteren Formhohlraum hineinerstreckt. Eine solche Form ermöglicht in der später noch näher beschriebenen Weise eine einfache Herstellung der erfindungsgemäßen Schuhsohle, wobei durch die konische Formgebung des oberen Teiles der Schuhsohle einerseits und des oberen Formhohlraumes anderseits nicht nur sichergestellt ist, daß dieser obere Teil der Schuhsohle in seiner richtigen Lage in der Form verankert ist, sondern auch eine einwandfreie Abdichtung zwischen dem oberen Teil der Schuhsohle und der Formwand gewährleistet ist. Dies ist deshalb wichtig, da sich sonst am oberen Teil der Schuhsohle beim Anschäumen des unteren, aus Polyurethan bestehenden Teiles Schwimmhäute bilden, deren Entfernung, da sie sich ebenso wie der untere Teil der Sohle mit dem Holz innig verbinden, einen beträchtlichen Arbeitsaufwand verursachen würde.

Um eine einwandfreie Abdichtung zwischen der Wandung des oberen Formhohlraumes und dem eingesetzten oberen Teil der Sohle sicherzustellen, sind erfindungsgemäß die Abmessungen des oberen Formhohlraumes geringfügig kleiner als die Abmessungen des darin eingesetzten oberen Teiles der Schuhsohle, so daß dieser obere Teil zunächst etwas aus dem oberen Formhohlraum herausragt. Durch die Abdeckung, welche auf den Formhauptkörper aufgesetzt wird und welche auf diesem Formhauptkörper unter Druck fixiert wird, um den beim Ausschäumen des Polyurethans entstehenden Druck aufzunehmen und um die Dichtheit der Form beim Schäumvorgang zu gewährleisten, wird der obere Teil der Schuhohle in den oberen Formhohlraum hineingepreßt und hiebei gerinfügig verformt, so daß auch bei Auftreten geringer Herstellungstoleranzen beim oberen Teil der Schuhsohle eine einwandfreie Abdichtung gewährleistet ist.

Bei der Herstellung einer Schuhsohle kann so vorgegangen werden, daß zunächst das polyurethanbildende Material in den unteren Formhohlraum des Formhauptkörpers eingefüllt wird, daß hierauf der obere Teil der Schuhsohle in den oberen Formhohlraum des Formhauptkörpers eingesetzt wird und daß schließlich die Abdeckung der Form aufgesetzt und fixiert wird, worauf das polyurethanbildende Material ausschäumen gelassen wird.

Für die Verbesserung der chemischen Verbindung ist es von Vorteil, wenn der Feuchtigkeitsgehalt des oberen Teiles der Schuhsohle vor dem Einlegen in die Form auf weniger als 12 %, vorzugsweise weniger als 6 % eingestellt wird. Vorteilhafterweise beträgt dieser Feuchtigkeitsgehalt des oberen Teiles der Schuhsohle zwischen 0,01 und 5 %.

Zumeist bildet der untere Teil der Schuhsohle auch gleich die Laufsohle, also es ist die Laufsohle mit diesem unteren Teil einstückig ausgebildet. Es kann aber fallweise zweckmäßig sein, eine gesonderte Laufsohle vorzusehen, die beispielsweise spezielle Eigenschaften hinsichtlich Abriebfestigkeit od.dgl. aufweist.

In der Zeichnung ist die Erfindung an Hand von Ausführungsbeispielen näher erläutert.

Fig. 1   zeigt einen Längsschnitt durch eine Ausführungsform der erfindungsgemäßen Schuhsohle.

Fig. 2   stellt einen Schnitt nach der Linie II-II der Fig. 1 dar.

Fig. 3   zeigt den hinteren Teil einer abgewandelten Ausführungsform einer erfindungsgemäßen Schuhsohle im Längsschnitt.

Fig. 4   zeigt einen Querschnitt durch eine Ausführungsform einer erfindungsgemäßen Form zur Herstellung der Schuhsohle.

Die erfindungsgemäße Schuhsohle besteht aus einem oberen Teil 1 aus Holz und aus einem unteren Teil 2 aus Polyurethan, der an den oberen Teil 1 angeschäumt ist. Der obere Teil 1 kann hiebei entweder aus Massivholz oder aus Preßholz bestehen, wobei sowohl das Massivholz als auch das Preßholz mit einer Holzfurnierabdeckung versehen sein kann. Es kann aber der obere Teil 1 auch aus Schichtholz bzw. Sperrholz gebildet sein. An der der Fußsohle zugewendeten Oberseite 3 weist der obere Teil 1 zweckmäßig eine orthopädische Form auf, so daß die Fußsohle in optimaler Weise unterstützt ist.

Beim Anschäumen des unteren Teiles 2 aus Polyurethan erfolgt eine innige, untrennbare Verbindung zwischen den Teilen 1 und 2 und zwar einerseits deshalb, da zwischen den OH-Gruppen des Holzes und den Isocyanatgruppen des Polyurethans eine chemische Verbindung bewirkt wird, anderseits deshalb, da durch das Anschäumen das Polyurethan in die Poren des Holzes eindringt, und hiedurch eine mechanische Verbindung bewirkt wird.

Bei den in der Zeichnung dargestellten Ausführungsformen bildet der untere Teil 2 sowohl die Zwischensohle als auch die Laufsohle. Es kann aber der untere Teil 2 auch lediglich die Zwischensohle bilden, an der eine gesonderte Laufsohle befestigt ist.

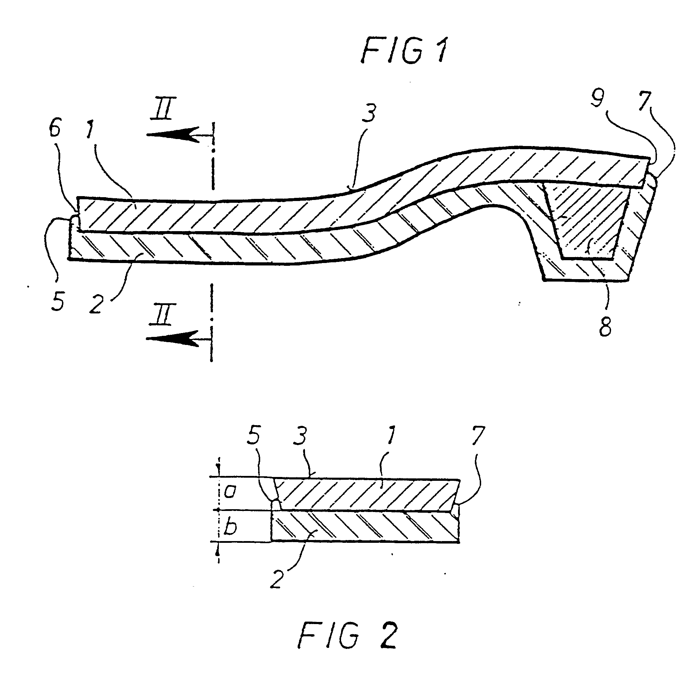

Bei der Ausführungsform nach den Fig. 1 und 2 steht der untere Teil 2 seitlich in horizontaler Richtung bei 4 über den oberen Teil vor und ist zusätzlich zu diesem seitlichen Vorstehen noch hochgezogen und übergreift bei 5 den oberen Teil 1. Dadurch entsteht eine Abstüfung 6, die den Randbereich des nicht dargestellten Schuhoberteiles aufnimmt. Die obere Kante 7 des seitlich über den oberen Teil 1 vorstehenden unteren Teiles 2 ist abgerundet, wodurch das Ausformen erleichtert wird.

Die Dicke a des oberen Teiles 1 beträgt im Ballenbereich, an der dicksten Stelle, bei Massivholz und Preßholz mindestens 9 mm und bei Schichtholz mindestens 7 mm. Bei Schichtholz kann eine kleinere Dicke gewählt werden, da die Holzschichten ein Verlaufen bzw. Hinauslaufen der Nägel oder Klammern zum Befestigen des Schuhoberteiles verhindern und somit die Gefahr geringer ist, daß durch schräge Lage der Nägel oder Klammern diese an der Sohlenoberseite 3 austreten. Auf jeden Fall ist die Dicke a des oberen Teiles so gewählt, daß dieser obere Teil 1 das tragende Element der Schuhsohle bildet.

Die Dicke b des unteren Teiles 2 zusammen mit der Dicke der Laufsohle einschließlich des Musters derselben an der Unterseite, die beim dargestellten Ausführungsbeispiel einstückig mit diesem unteren Teil 2 ausgebildet ist, beträgt im Ballenbereich an der dicksten Stelle, vom hochgezogenen Rand 5 abgesehen, senkrecht zur Laufsohle gemessen, mindestens 7 mm und ist zumindest so groß wie die halbe Dicke a des oberen Teiles 1, kann aber auch größer sein.

Im Absatzbereich ist beim dargestellten Ausführungsbeispiel mit dem oberen Teil 1 ein Holzkern 8 durch Kleben und/oder Nägeln bzw. Schrauben verbunden, an dem das polyurethanbildende Material des unteren Teiles gleichfalls angeschäumt ist. Bei Verwendung von Massivholz oder Preßholz für den oberen Sohlenteil ist es auch möglich, diesen Holzkern einstückig mit dem oberen Teil 1 auszubilden. Insbesondere dann, wenn der Absatz der Schuhsohle nur eine geringe Höhe aufweist, kann dieser Holzkern 8 auch entfallen.

Die Seitenwände 9 des oberen Teiles laufen von oben nach unten leicht konisch zusammen, so daß dieser obere Teil 1 auf einfache Weise in der Form zur Herstellung der Schuhsohle verankert werden kann, wie im folgenden noch näher erläutert werden wird.

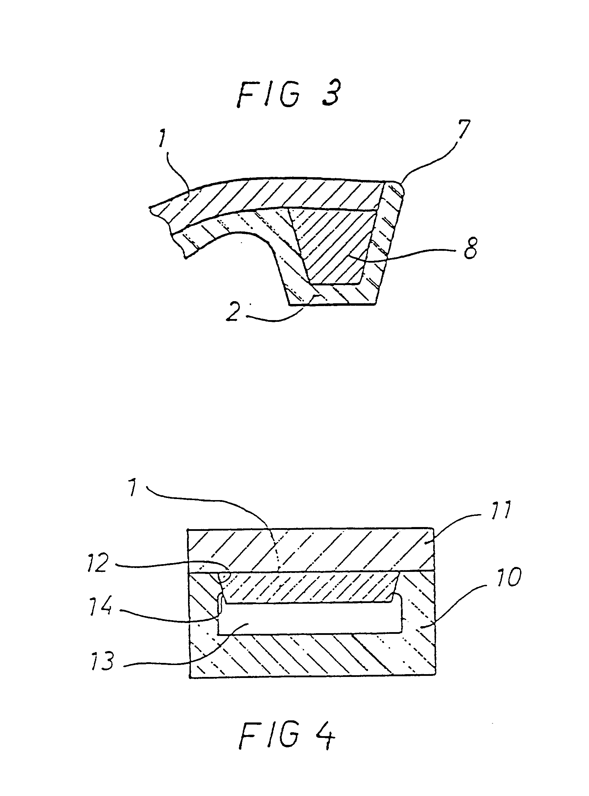

Dort, wo kein Schuhoberteil an der Sohle befestigt wird, also beispielsweise bei Clogs im hinteren Bereich der Sohle, kann der untere Teil 2 auch bis zur Sohlenoberseite 3 hochgezogen sein, wie dies beispielsweise in Fig. 3 ersichtlich ist.

In Fig. 4 ist eine Form zur Herstellung einer Sohle nach den Fig. 1 und 2 gezeigt. Diese Form besteht aus einem Formhauptkörper 10 und aus einer Abdeckung 11. Der Formhauptkörper 10 weist eine oberen Formhohlraum 12 und einen sich daran anschließenden unteren Formhohlraum 13 auf. Der obere Formhohlraum 12 besitzt eine in Richtung zum unteren Formhohlraum 13 konisch zusammenlaufende Seitenwand, deren Neigung im wesentlichen der Neigung der Seitenwand 9 des oberen Teiles 1 der Schuhsohle entspricht, der in diesem oberen Formhohlraum eingesetzt wird. Der untere Formhohlraum 13 ist an der Übergangsstelle 14 breiter als der obere Formhohlraum 12.

Die Abmessungen des oberen Formhohlraumes 12 sind geringfügig kleiner als die Abmessungen des oberen Teiles 1 der Schuhsohle, so daß dann, wenn dieser obere Teil 1 unter Druck in den oberen Formhohlraum 12 eingesetzt wird, eine gute Abdichtung zwischen den oberen Teil 1 der Schuhsohle und der Seitenwand dem oberen Formhohlraumes 12 erzielt wird, wodurch ein Entstehen von unerwünschten Schwimmhäuten beim Ausschäumen des Polyurethans verhindert wird.

Die Form ist so ausgebildet, daß beim Einsetzen des oberen Teiles 1 der Schuhsohle dieser Teil ein Stück in den unteren Formhohlraum 13 hineinragt, so daß eine Schuhsohle entsteht, bei welcher der untere Teil 2 bei 5 seitlich über einen Teil der Höhe des oberen Teiles 1 hochgezogen ist.

Im Formhauptkörper 10 kann eine nicht dargestellte, in den unteren Formhohlraum 13 mündende Einfüllöffnung vorgesehen sein.

Bei der Herstellung einer erfindungsgemäßen Schuhsohle kann so vorgegangen werden, daß zunächst in den unteren Formhohlraum 13 polyurethanbildende Material eingefüllt wird. Anschließend wird der obere, aus Holz bestehende Teil 1 in den oberen Formhohlraum 12 eingesetzt. Schließlich wird die Abdeckung 11 aufgesetzt und verankert, wobei durch das Aneinanderpressen zwischen Formhauptkörper 10 und Abdeckung 11 der obere Teil 1 der Schuhsohle fest und dicht in den oberen Formhohlraum 12 hineingepreßt wird. Das polyurethanbildende Material schäumt nun an dem oberen Teil 1 der Schuhsohle an, wobei der untere Teil 2 gebildet wird. Bei dieser Vorgangsweise ist die Einfüllöffnung nicht erforderlich.

Es kann aber auch so vorgegangen werden, daß zunächst der obere Teil 1 der Schuhsohle in den oberen Formhohlraum 12 des Formhauptkörpers 10 eingesetzt wird, daß hierauf die Abdeckung 11 aufgesetzt und fixiert wird, wobei wieder der obere Teil 1 der Schuhsohle fest und dicht in den oberen Formhohlraum 12 hineingepreßt wird, und daß dann das polyurethanbildende Material über die Einfüllöffnung in den unteren Formhohlraum 13 eingegossen oder eingespritzt wird. Anschließend wird das polyurethanbildende Material ausschäumen gelassen, wobei es wiederum den unteren Teil 2 der Schuhsohle bildet, der beim Ausschäumen fest mit dem oberen Teil 1 verbunden wird.

Um eine bessere chemische Verbindung zwischen dem oberen Teil 1 und dem unteren Teil 2 der Schuhsohle zu erzielen, wird zweckmäßig der Feuchtigkeitsgehalt des oberen Teiles 1 der Schuhsohle vor dem Einlegen in die Form auf einen Wert zwischen 0,01 und 5 % eingestellt.

**Patentansprüche**

1. Schuhsohle, bestehend aus einem oberen Teil aus Massivholz, Preßholz oder aus Schichtholz, der eine der Fußsohle zugewendete, vorzugsweise orthopädisch geformte Sohlenoberseite aufweist, und aus einem unteren Teil aus vorzugsweise geschäumtem Polyurethan, dessen Unterseite selbst die Laufsohle bildet oder mit einer gesonderten Laufsohle versehen ist, dadurch gekennzeichnet, daß

a) der untere Teil (2) am oberen Teil (1) angeschäumt ist,
b) der untere Teil (2) zumindest entlang eines Teiles der Sohlenseitenfläche seitlich über den oberen Teil (1) vorsteht und dabei
c) seitlich über einen Teil der Dicke des oberen Teils (1) (bei 5) hochgezogen ist.

2. Schuhsohle, bestehend aus einem oberen Teil aus Massivholz, Preßholz oder aus Schichtholz, der eine der Fußsohle zugewendete, vorzugsweise orthopädisch geformte, Sohlenoberseite aufweist, und aus einem unteren Teil aus, vorzugsweise geschäumtem, Polyurethan, dessen Unterseite selbst die Laufsohle bildet oder mit einer gesonderten Laufsohle versehen ist, dadurch gekennzeichnet, daß

a) der untere Teil (2) am oberen Teil (1) angeschäumt ist,
b) der untere Teil (2) zumindest entlang eines Teiles der Sohlenseitenfläche seitlich über den oberen Teil (1) vorsteht und dabei
c) zumindest an den Stellen, an welchen kein Schuhoberteil befestigt ist, bis zur Sohlenoberseite des oberen Teiles (1) hochgezogen ist.

3. Schuhsohle nach Anspruch 1 oder 2, dadurch gekennzeichnet, daß der obere Teil (1) das tragende Element der Schuhsohle bildet und im Ballenbereich an der dicksten Stelle eine Dicke (a) - senkrecht zur Laufsohle gemessen - aufweist, die bei Massivholz und Preßholz mindestens 9 mm und bei Schichtholz mindestens 7 mm beträgt.

4. Schuhsohle nach Anspruch 1, 2 oder 3, dadurch gekennzeichnet, daß die Dicke (b) des unteren Teles (2) im Ballenbereich unterhalb des oberen Teiles (1) an der dicksten Stelle - senkrecht zur Laufsohle gemessen - mindestens 7 mm beträgt.

5. Schuhsohle nach einem der Ansprüche 1 bis 4, dadurch gekennzeichnet, daß die Dicke (b) des unteren Teiles (2) - senkrecht zur Laufsohle (7) gemessen - an der dicksten Stelle des Ballenbereiches zumindest der halben Dicke (a), vorzugsweise der ganzen Dicke, des oberen Teiles (1) entspricht.

6. Schuhsohle nach einem der Ansprüche 1 bis 5, dadurch gekennzeichnet, daß beim Anschäumen des unteren Teiles (2) am oberen Teil (1) eine chemische Verbindung zwischen den OH-Gruppen des Holzes und den Isocyanatgruppen des Polyurethans bewirkt wird.

7. Schuhsohle nach einem der Ansprüche 1 bis 6, dadurch gekennzeichnet, daß die obere Kante (7) des seitlich über den oberen Teil (1) vorstehenden unteren Teiles (2) abgerundet ist.

8. Schuhsohle nach einem der Ansprüche 1 bis 7, dadurch gekennzeichnet, daß die obere Kante (7) des seitlich über den oberen Teil (1) vorstehenden unteren Teiles (2) im wesentlichen parallel zur Kehlung, das ist die Übergangsfläche zwischen der Laufsohle des Sohlenvorderteiles und dem Absatzfleck, verläuft und daß die sichtbare Seitenfläche des oberen Teiles (1) im Absatzbereich wesentlich größer, beispielsweise etwa doppelt so groß ist, wie die sichtbare Seitenfläche des unteren Teiles (2) im Absatzbereich.

9. Schuhsohle nach einem der Ansprüche 1 bis 7, dadurch gekennzeichnet, daß im Absatzbereich ein mit dem oberen Teil (1) verbundener Holzkern (8) vorgesehen ist, an den das Polyurethan-Material des unteren Teiles (2) gleichfalls angeschäumt ist.

10. Schuhsohle nach einem der Ansprüche 1 bis 9, dadurch gekennzeichnet, daß der obere Teil (1) einstückig ausgebildet ist.

11. Schuhsohle nach Anspruch 10, dadurch gekennzeichnet, daß der untere Teil (2) ein spezifisches Gewicht unter 0,55, vorzugsweise zwischen 0,45 und 0,55 aufweist.

12. Schuhsohle nach einem der Ansprüche 1 bis 9, dadurch gekennzeichnet, daß der obere Teil (1) aus zumindest zwei Stücken besteht, die durch einen einstückig mit dem unteren Teil (2) ausgebildeten Verbindungsteil miteinander verbunden sind.

13. Schuhsohle nach Anspruch 12, dadurch gekennzeichnet, daß der untere Teil (2) ein spezifisches Gewicht zwischen 0,65 und 0,75, vorzugsweise zwischen 0,65 und 0,7 aufweist.

14. Schuhsohle nach einem der Ansprüche 1 bis 13, dadurch gekennzeichnet, daß der untere Teil (2) eine Härte zwischen 45 und 65 Shore A, vorzugsweise zwischen 50 und 60 Shore A, aufweist.

15. Schuhsohle nach einem der Ansprüche 1 bis 14, dadurch gekennzeichnet, daß die Seitenwand (9) des oberen Teiles (1) in Richtung zum unteren Teil (2) konisch zusammenläuft.

16. Schuhsohle nach einem der Ansprüche 1 bis 15, dadurch gekennzeichnet, daß der Schuhoberteil am oberen Teil, (1) durch Klammern oder Nägel befestigt ist.

17. Sohle nach einem der Ansprüche 1 bis 16, dadurch gekennzeichnet, daß die Laufsohle einstückig mit dem unteren Teil (2) ausgebildet ist.

18. Form zur Herstellung einer Schuhsohle nach einem der Ansprüche 1 bis 17, dadurch gekennzeichnet, daß sie aus einem Formhauptkörper (10) und einer Abdeckung (11) besteht, wobei der Formhauptkörper einen oberen Formhohlraum (12) und einen gegebenenfalls eine Einfüllöffnung für das polyurethanbildende Material aufweisenden unteren Formhohlraum (13) besitzt, daß der obere Formhohlraum (12) eine in Richtung zum unteren Formhohlraum (13) konisch zusammenlaufende Seitenwand aufweist, deren Neigung im wesentlichen der Neigung der Seitenwand (9) des oberen Teiles (1) der Schuhsohle entspricht, daß im Übergangsbereich (14) zwischen den beiden Formhohlräumen der untere Formhohlraum (13) gegenüber dem oberen Formhohlraum (12) verbreitert ist, und daß der obere Formhohlraum (12) so ausgebildet ist, daß sich bei in diesen oberen Formhohlraum eingesetztem oberen Teil (1) der Schuhsohle dieser Teil (1) teilweise in den unteren Formhohlraum (13) hinein erstreckt.

19. Form nach Anspruch 18, dadurch gekennzeichnet, daß die Abmessungen des oberen Formhohlraumes (12) geringfügig kleiner sind als die Abmessungen des darin eingesetzten oberen Teiles (1) der Schuhsohle.

20. Verfahren zur Herstellung einer Schuhsohle nach einem der Ansprüche 1 bis 17 unter Verwendung einer Form nach einem der Ansprüche 18 oder 19, dadurch gekennzeichnet, daß zunächst das polyurethanbildende Material in den unteren Formhohlraum des Formhauptkörpers eingefüllt wird, hierauf der obere Teil der Schuhsohle in den oberen Formhohlraum des Formhauptkörpers eingesetzt wird und schließlich die Abdeckung der Form aufgesetzt und fixiert wird, worauf das polyurethanbildende Material ausschäumen gelassen wird.

21. Verfahren nach Anspruch 20, dadurch gekennzeichnet, daß der Feuchtigkeitsgehalt des oberen Teiles der Schuhsohle vor dem Eingegen in die Form auf weniger als 12 %, vorzugsweise auf weniger als 6 %, eingestellt wird.

22. Verfahren nach Anspruch 21, dadurch gekennzeichnet, daß der Feuchtigkeitsgehalt des oberen Teiles der Schuhsohle zwischen 0,01 und 5 % beträgt.

23. Verfahren nach einem der Ansprüche 20 bis 22, dadurch gekennzeichnet, daß vor dem Einsetzen des oberen Teiles der Schuhsohle in den oberen Formhohlraum sowie vor dem Einfüllen bzw. Eingießen bzw. Einspritzen des polyurethanbildenden Materials in den unteren Formhohlraum in diesen unteren Formhohlraum eine Laufsohle eingesetzt wird.

## Claims

1. Shoe sole, consisting of an upper part of compact wood, compressed wood or of laminated wood and having an upper sole surface facing the sole of the foot and being preferably orthopaedically shaped and consisting of a lower part of polyurethane being preferably foamed, the bottom side of said lower part either itself forming the running sole or being provided with a separate running sole, characterized in that

a) the lower part (2) is applied to the upper part (1) by foaming operation,
b) the lower part (2) laterally protrudes beyond the upper part (1) at least along part of the side surface of the sole and is at the same time
c) laterally extending in upward direction over part of the thickness of the upper part (1) (at 5).

2. Shoe sole, consisting of an upper part of compact wood, compressed wood or of laminated wood and having an upper sole surface facing the sole of the foot and being preferably orthopaedically shaped and consisting of a lower part of polyurethane being preferably foamed, the bottom side of said lower part either itself forming the running sole or being provided with a separate running sole, characterized in that

a) the lower part (2) is applied to the upper part (1) by foaming operation,
b) the lower part (2) laterally protrudes beyond the upper part (1) at least along part of the side surface of the sole and is at the same time
c) extending in upward direction till the upper surface of the sole of the upper part (1) at those locations at which no shoe upper is fixed.

3. Shoe sole according to claim 1 or 2, characterized in that the upper part (1) forms the carrying element of the shoe sole and has within the ball area and at the location of the greatest thickness a thickness (a) - as measured in normal relation to the running sole - of at least 9 mm in case of compact wood and compressed wood and of at least 7 mm in case of laminated wood.

4. Shoe sole according to claim 1, 2 or 3, characterized in that the thickness (b) of the lower part (2) is at least 7 mm within the ball area below the upper part (1) at the thickest location - as measured in normal relation to the running sole.

5. Shoe sole according to any of the claims 1 to 4, characterized in that the thickness (b) of the lower part (2) corresponds - as measured in normal relation to the running sole (7) - to at least half of the thickness (a), preferably of the whole thickness, of the upper part (1) at that location of the ball area which has the greatest thickness.

6. Shoe sole according to any of the claims 1 to 5, characterized in that, when applying the lower part (2) to the upper part (1) by foaming operation, there is effected a chemical bond between the OH-groups of the wood and the isocyanate groups of the polyurethane.

7. Shoe sole according to any of the claims 1 to 6, characterized in that the upper edge (7) of the lower part (2) laterally protruding over the upper part (1) is rounded.

8. Shoe sole according to any of the claims 1 to 7, characterized in that the upper edge (7) of the lower part (2) laterally extending beyond the upper part (1) extends in essentially parallel relation to the flute, this is the surface of transition between the running sole of the front portion of the sole and the heel patch, and in that the visible side surface of the upper part (1) is, within the heel area, substantially greater than, for example approximately twice the visible side surface of the lower part (2) within the heel area.

9. Shoe sole according to any of the claims 1 to 7, characterized in that a wood core (8) is provided within the heel area and is connected with the upper part (1), the polyurethane material of the lower part (2) equally being applied to this wood core by foaming operation.

10. Shoe sole according to any of the claims 1 to 9, characterized in that the upper part (1) is designed as one single part.

11. Shoe sole according to claim 10, characterized in that the lower part (2) has a specific gravity below 0.55, preferably between 0.45 and 0.55.

12. Shoe sole according to any of the claims 1 to 9, characterized in that the upper part (1) consists of at least two component parts which are connected one with the other by means of a connecting part forming one integral part with the lower part (2).

13. Shoe sole according to claim 12, characterized in that the lower part (2) has a specific gravity between 0.65 and 0.75, preferably between 0.65 and 0.7.

14. Shoe sole according to any of the claims 1 to 13, characterized in that the lower part (2) has a hardness between 45 and 65 Shore A, preferably between 50 and 60 Shore A.

15. Shoe sole according to any of the claims 1 to 14, characterized in that the side wall (9) of the upper part (1) conically tapers in direction to the lower part (2).

16. Shoe sole according to any of the claims 1 to 15, characterized in that the shoe upper is fixed to the upper part (1) by clamps or nails.

17. Sole according to any of the claims 1 to 16, characterized in that the running sole is designed to form one integral part with the lower part (2).

18. Mould for producing a shoe sole according to any of the claims 1 to 17, characterized in that it consists of a main mould body (10) and of a cover (11), the main mould body comprising an upper mould cavity (12) and a lower mould cavity (13) optionally comprising a charging opening for the polyurethane-forming material, in that the upper mould cavity (12) has a side wall conically tapering in direction to the lower mould cavity (13) and having an inclination essentially corresponding to the inclination of the side wall (9) of the upper part (1) of the shoe sole, in that the lower mould cavity (13) has a width enlarged relative to the upper mould cavity (12) within the area (14) of transition between both mould cavities and in that the upper mould cavity (12) is designed such that, with the upper part (1) of the shoe sole being positioned within this upper mould cavity, this part (1) at least partially extends into the lower mould cavity (13).

19. Mould as claimed in claim 18, characterized in that the dimensions of the upper mould cavity (12) are smaller for a minor amount than the dimensions of the upper part (1) of the shoe sole positioned therein.

20. Process for producing a shoe sole according to any of the claims 1 to 17 by using a mould according to any of the claims 18 or 19, characterized in that the polyurethane-forming material is first filled into the lower mould cavity of the main mould body, the upper part of the shoe sole is then inserted into the upper mould cavity of the main mould body and finally the cover of the mould is placed on top and fixed, whereupon the polyurethane-forming material is allowed to foam.

21. Process according to claim 20, characterized in that the humidity content of the upper part of the shoe sole is, prior to positioning this part into the mould, adjusted to less than 12 %, preferably to less than 6 %.

22. Process according to claim 21, characterized in that the humidity content of the upper part of the shoe sole is between 0.01 and 5 %.

23. Process according to any of the claims 20 to 22, characterized in that a running sole is positioned within the lower mould cavity prior to placing the upper part of the shoe sole into the upper mould cavity as well as prior to filling or, respectively, pouring or, respectively, injecting the polyurethane-forming material into the lower mould cavity.

**Revendications**

1. Semelle de chaussure, constituée d'un élément supérieur en bois plein, bois comprimé ou bois stratifié, qui offre une face supérieure de semelle tournée vers la plante du pied et ayant de préférence une forme orthopédique, et d'un élément inférieur, de préférence en mousse de polyuréthanne, dont la face inférieure constitue elle-même la semelle d'usure ou est pourvue d'une semelle d'usure séparée, caractérisée en ce que

a) l'élément inférieur (2) est réalisé par formation d'une mousse sur l'élément supérieur (1) et en ce que

b) cet élément inférieur (2) déborde latéralement par rapport à l'élément supérieur (1) au moins le long d'une partie de la face latérale de la semelle et, pour ce faire,

c) remonte latéralement (en 5) sur une partie de l'épaisseur de cet élément supérieur (1).

2. Semelle de chaussure, constituée d'un élément supérieur en bois plein, bois comprimé ou bois stratifié, qui offre une face supérieure de semelle tournée vers la plante du pied et ayant de préférence une forme orthopédique, et d'un élément inférieur, de préférence en mousse de polyuréthanne, dont la face inférieure constitue elle-même la semelle d'usure ou est pourvue d'une semelle d'usure séparée, caractérisée en ce que

a) l'élément inférieur (2) est réalisé par formation d'une mousse sur l'élément supérieur (1) et en ce que

b) cet élément inférieur (2) déborde latéralement par rapport a l'élément supérieur (1) au moins le long d'une partie de la face latérale de la semelle et, pour ce faire,

c) remonte, au moins aux endroits où n'est pas fixée la tige de la chaussure, jusqu'à la face supérieure de la semelle qui est offerte par l'élément supérieur (1).

3. Semelle de chaussure selon la revendication 1 ou 2, caractérisée en ce que l'élément supérieur (1) constitue l'élément porteur de la semelle de chaussure et offre, dans la zone de la partie antérieure de la plante du pied et à l'endroit le plus épais, une épaisseur (a) qui, mesurée perpendiculairement à la semelle d'usure, est au moins égale à 9 mm dans le cas du bois plein et du bois comprimé, et au moins égale à 7 mm dans le cas du bois stratifié.

4. Semelle de chaussure selon la revendication 1, 2 ou 3, caractérisée en ce que, dans la zone de la partie antérieure de la plante du pied, au-dessous de l'élément supérieur (1) et à l'endroit le plus épais, l'épaisseur (b) de l'élément inférieur (2), mesurée perpendiculairement à la semelle d'usure, est au moins égale à 7 mm.

5. Semelle de chaussure selon l'une des revendications 1 à 4, caractérisée en ce que, à l'endroit le plus épais de la zone de la partie antérieure de la plante du pied, l'épaisseur (b) de l'élément inférieur (2), mesurée perpendiculairement à la semelle d'usure (7), correspond au moins à la moitié de l'épaisseur (a) de l'élément supérieur (1) et, de préférence, à cette épaisseur entière.

6. Semelle de chaussure selon l'une des revendications 1 à 5, caractérisée en ce que, lors de la réalisation de l'élément inférieur (2) par formation de mousse sur l'élément supérieur (1), il se crée une liaison chimique entre les radicaux OH du bois et les radicaux isocyanate du polyuréthanne.

7. Semelle de chaussure suivant l'une des revendications 1 à 6, caractérisée en ce que l'arête supérieure (7) de l'élément inférieur (2) qui déborde latéralement par rapport à l'élément supérieur (1) est arrondie.

8. Semelle de chaussure suivant l'une des revendications 1 à 7, caractérisée en ce que l'arête supérieure (7) de l'élément inférieur (2) qui déborde latéralement par rapport à l'élément supérieur (1) s'étend de façon essentiellement parallèle à l'emboîtage du talon, c'est-à-dire la surface de transition entre la semelle d'usure de l'avant-pied de semelle et le talon, et en ce que, dans la région du talon, la surface latérale visible de l'élément supérieur (1) est notablement plus grande que la surface latérale visible de l'élément inférieur (2) dans cette même zone du talon, par exemple égale environ au double de celle-ci.

9. Semelle de chaussure suivant l'une des revendications 1 à 7, caractérisée en ce qu'il est prévu, dans la zone du talon, une âme en bois (8) solidaire de l'élément supérieur (1) et sur laquelle est également réalisée, par formation d'une mousse, la matière de type polyuréthanne constituant l'élément inférieur (2).

10. Semelle de chaussure suivant l'une des revendications 1 à 9, caractérisée en ce que l'élément supérieur (1) est réalisé en une seule pièce.

11. Semelle de chaussure suivant la revendication 10, caractérisée en ce que l'élément inférieur (2) a un poids spécifique inférieur à 0,55, de préférence compris entre 0,45 et 0,55.

12. Semelle de chaussure suivant l'une des revendications 1 à 9, caractérisée en ce que l'élément supérieur (1) est constitué d'au moins deux morceaux qui sont rendus solidaires l'un de l'autre par une pièce de liaison venue de matière avec l'élément inférieur (2).

13. Semelle de chaussure selon la revendication 12, caractérisée en ce que l'élément inférieur (2) a un poids spécifique compris entre 0,65 et 0,75, de préférence entre 0,65 et 0,7.

14. Semelle de chaussure selon l'une des revendications 1 à 13, caractérisée en ce que l'élément inférieur (2) a une dureté shore A comprise entre 45 et 65, de préférence entre 50 et 60.

15. Semelle de chaussure selon l'une des revendications 1 à 14, caractérisée en ce que la face latérale (9) de l'élément supérieur (1) converge de façon conique en direction de l'élément inférieur (2).

16. Semelle de chaussure selon 1 une des revendications 1 à 15, caractérisée en ce que la tige de la chaussure est fixée sur l'élément supérieur (1) par des crampons ou des clous.

17. Semelle de chaussure suivant l'une des revendications 1 à 16, caractérisée en ce que la semelle d'usure est réalisée en une seule pièce avec l'élément inférieur (2).

18. Moule de fabrication d'une semelle de chaussure suivant l'une des revendications 1 à 17, caractérisé en ce qu'il est constitué d'un corps principal (10) et d'un couvercle (11), le corps principal offrant une cavité supérieure de moule (12) et une cavité inférieure de moule (13) offrant éventuellement un orifice de remplissage pour la matière de formation du polyuréthanne, en ce que la cavité supérieure de moule (12) comporte une paroi latérale convergeant de façon conique en direction de la cavité inférieure (13) et dont l'inclinaison correspond sensiblement à l'inclinaison de la face latérale (9) de l'élément supérieur (1) de la semelle de chaussure, en ce que, dans la zone (14) de transition entre les deux cavités, la cavité inférieure (13) s'élargit par rapport à la cavité supérieure (12) et en ce que cette cavité supérieure (12) est agencée de façon que, lorsque l'élément supérieur (1) de la semelle est mis en place dans la cavité supérieure du moule, cet élément (1) s'étend partiellement dans la cavité inférieure (13).

19. Moule selon la revendication 18, caractérisé en ce que les dimensions de sa cavité supérieure (12) sont légèrement plus petites que les dimensions de l'élément supérieur (1) de la semelle qui y est placé.

20. Procédé de fabrication d'une semelle de chaussure suivant l'une des revendications 1 à 17 en utilisant un moule suivant l'une des revendications 18 et 19, caractérisé en ce qu'on remplit tout d'abord de matière de formation du polyuréthanne la cavité inférieure du corps principal du moule, on place ensuite l'élément supérieur de la semelle de chaussure dans la cavité supérieure de ce corps principal et on pose et fixe enfin le couvercle du moule, à la suite de quoi on laisse la matière de formation du polyuréthanne former une mousse.

21. Procédé suivant la revendication 20, caractérisé en ce que, avant de le mettre en place dans le moule, on règle la teneur en humidité de l'élément supérieur de la semelle à moins de 12 %, de préférence à moins de 6 %.

22. Procédé suivant la revendication 21, caractérisé en ce que la teneur en humidité de l'élément supérieur de la semelle a une valeur comprise entre 0,01 et 5 %.

23. Procédé suivant l'une des revendications 20 à 22, caractérisé en ce que, avant de mettre en place l'élément supérieur de la semelle de chaussure dans la cavité supérieure du moule et avant d'introduire la matière de formation au polyuréthanne dans la cavité inférieure du moule par remplissage, coulée ou injection, on met une semelle d'usure en place dans cette cavité inférieure du moule.

*FIG 1*

*FIG 2*

## FIG 3

## FIG 4